(19) Europäisches Patentamt
European Patent Office
Office européen des brevets

(11) **EP 1 372 252 A1**

(12) **DEMANDE DE BREVET EUROPEEN**

(43) Date de publication:
**17.12.2003 Bulletin 2003/51**

(51) Int Cl.⁷: **H02M 3/158**

(21) Numéro de dépôt: **03291403.8**

(22) Date de dépôt: **12.06.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **13.06.2002 FR 0207280**

(71) Demandeur: **STMicroelectronics**
**92120 Montrouge (FR)**

(72) Inventeurs:
• **Nebon, Jérôme**
**38000 Grenoble (FR)**
• **Balmefrezol,**
**38120 Saint-Egreve (FR)**

(74) Mandataire: **Casalonga, Axel**
**BUREAU D.A. CASALONGA - JOSSE**
**Paul-Heyse-Strasse 33**
**80336 München (DE)**

(54) **Dispositif et procédé de pilotage d'une source d'alimentation à découpage et source d'alimentation à découpage pourvue d'un tel dispositif de pilotage**

(57) Ce dispositif de pilotage d'une source d'alimentation à découpage, qui comprend une inductance et deux commutateurs (N, P) de commande du niveau de tension circulant dans l'inductance, comporte un premier condensateur (Cp) destiné à être chargé à courant constant, à partir d'un niveau de tension nul, un deuxième condensateur (Cn) destiné à être déchargé audit courant constant à partir d'un niveau de tension prédéterminé (Vsup) supérieur au niveau de tension (Vs) de la source d'alimentation à courant continu, et des moyens de comparaison (A1, A2) pour comparer la tension nominale de sortie de la source d'alimentation avec la tension des premier et deuxième condensateurs (Cp, Cn) pour élaborer des signaux de pilotage des premier et deuxième commutateurs.

# FIG.3

**Description**

La présente invention concerne, de manière générale, les sources d'alimentation à découpage et, en particulier, les circuits de régulation utilisés pour piloter les cellules de commutation entrant dans la constitution de ces sources d'alimentation.

Comme on le sait, les alimentations à découpage sont des convertisseurs courant continu-courant continu, abaisseurs ou élévateurs de tension. Dans le cas particulier des convertisseurs abaisseurs de tension, ces alimentations comportent classiquement une inductance, placée par exemple du côté de la sortie du convertisseur. Cette inductance est raccordée, d'une part, par l'intermédiaire d'un premier commutateur, à une source d'alimentation à courant continu et, d'autre part, à la masse, par l'intermédiaire d'un deuxième commutateur.

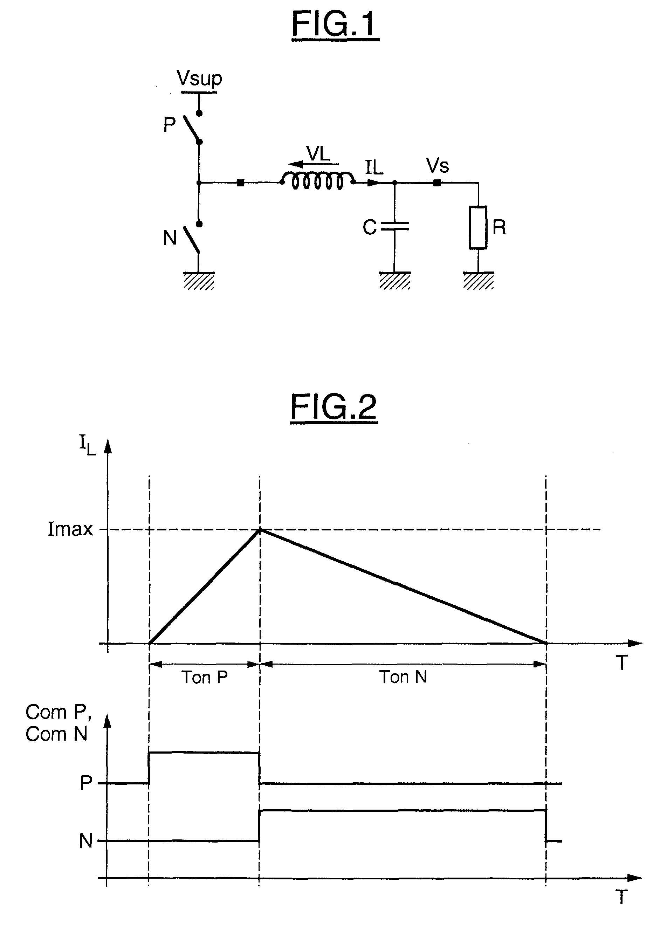

On a représenté, sur la figure 1, la structure générale d'un convertisseur continu-continu abaisseur de tension, de type classique, utilisé pour l'alimentation d'une charge R et, sur la figure 2, des chronogrammes indiquant l'évolution du courant circulant dans l'inductance et la variation des signaux de pilotage des premier et deuxième commutateurs P et N, respectivement.

Dans les sources d'alimentation à découpage de ce type, le circuit de régulation pilote les premier et deuxième commutateurs pour les commuter de manière à éviter que le courant circulant à travers l'inductance devienne négatif.

Habituellement, le pilotage des commutateurs est effectué à partir d'une mesure du courant circulant à travers l'inductance en utilisant des détecteurs de courant appropriés, ce qui présente des inconvénients majeurs en termes de puissance consommée et de rendement, en particulier pour des charges faibles.

Le but de l'invention est donc de pallier ces inconvénients et de fournir un dispositif de pilotage d'une source d'alimentation à découpage, permettant de prédire l'instant auquel le courant circulant dans l'inductance s'annule de manière à éviter l'utilisation de moyens de mesure de ce courant.

Ainsi, selon l'invention, il est proposé un dispositif de pilotage d'une source d'alimentation à découpage, ladite source d'alimentation comprenant une inductance et deux commutateurs de commande du niveau de tension circulant dans l'inductance.

Ce dispositif de pilotage comporte un premier condensateur destiné à être chargé à courant constant, à partir d'un niveau de tension nul, un deuxième condensateur destiné à être déchargé audit courant constant à partir d'un niveau de tension prédéterminé supérieur au niveau de tension de la source d'alimentation à courant continu, et des moyens de comparaison pour comparer la tension nominale de sortie de la source d'alimentation avec la tension des premier et deuxième condensateurs pour délivrer des signaux de pilotage des premier et deuxième commutateurs.

Selon une autre caractéristique de ce dispositif, les moyens de comparaison comportent un premier comparateur dont la borne non inverseuse est raccordée à la sortie de la source d'alimentation à découpage et dont la borne inverseuse reçoit le niveau de tension du premier condensateur.

Les moyens de comparaison comportent en outre un deuxième comparateur dont la borne non inverseuse est raccordée à la sortie de la source d'alimentation à découpage et dont la borne inverseuse reçoit le niveau de tension du deuxième condensateur.

Selon l'invention, il est également proposé une source d'alimentation à découpage comprenant une inductance raccordée, d'une part, à une source d'alimentation à courant continu par l'intermédiaire d'un premier commutateur et, d'autre part, à la masse par l'intermédiaire d'un deuxième commutateur, et un dispositif de pilotage des commutateurs tel que défini ci-dessus.

L'invention propose en outre une source d'alimentation à découpage, comprenant une inductance dont une première borne est raccordée à une source d'alimentation à courant continu et dont une deuxième borne est raccordée, d'une part, à la sortie de source d'alimentation par l'intermédiaire d'un premier commutateur et, d'autre part, à la masse par l'intermédiaire d'un deuxième commutateur et un dispositif de pilotage des commutateurs tel que défini ci-dessus.

Enfin, l'invention propose un procédé de pilotage d'une source d'alimentation à découpage comprenant une inductance et deux commutateurs de commande du niveau de tension circulant dans l'inductance et un dispositif de pilotage des commutateurs, selon lequel on charge à courant constant, à partir d'un niveau de tension nul, un premier condensateur, on décharge audit courant constant un deuxième condensateur à partir d'un niveau de tension prédéterminé supérieur au niveau de tension de la source d'alimentation à courant continu, et l'on compare la tension nominale de sortie de la source d'alimentation avec la tension des premier et deuxième condensateurs pour délivrer des signaux de pilotage des premier et deuxième commutateurs.

D'autres buts, caractéristiques et avantages de l'invention apparaîtront à la lecture de la description qui va suivre, donnée uniquement à titre d'exemple non limitatif, et faite en référence aux dessins annexés, sur lesquels :

- la figure 1, dont il a déjà à été fait mention, décrit l'architecture générale d'un convertisseur courant continu-courant continu abaisseur de tension selon l'état de la technique ;
- la figure 2 montre la variation du courant circulant dans l'inductance du circuit de la figure 1, ainsi que la variation en fonction du temps des signaux de pilotage des premier et deuxième commutateurs ;
- la figure 3 est un schéma synoptique d'un circuit de régulation d'un circuit convertisseur courant continu-courant continu abaisseur de tension conforme à l'invention ;

- la figure 4 montre la variation, en fonction du temps, des principaux signaux du circuit de la figure 3 ; et
- la figure 5 décrit l'architecture d'un convertisseur élévateur de tension auquel s'applique également l'invention.

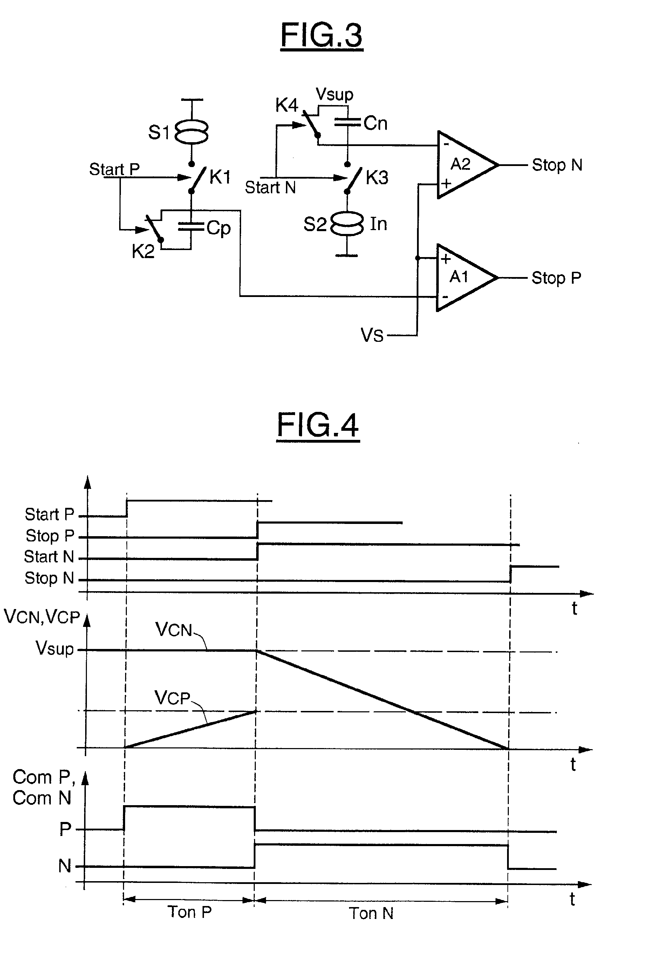

Sur la figure 3, on a représenté une partie d'un circuit de régulation pour source d'alimentation à découpage, désignée par la référence numérique générale 10.

Cette portion de circuit est destinée à être associée à un convertisseur courant continu-courant continu classique, tel que celui décrit précédemment en référence à la figure 1 pour l'élaboration des signaux de pilotage ComP, ComN des commutateurs de ce convertisseur. Plus particulièrement, elle est destinée à délivrer des signaux destinés à provoquer l'ouverture de ces commutateurs.

Comme on le voit sur cette figure, ce circuit 10 comporte essentiellement un premier condensateur Cp et un deuxième condensateur Cn, ainsi que deux comparateurs A1 et A2, constitués par exemple de transistors opérationnels dont la sortie délivre les signaux de pilotage StopP et StopN de l'ouverture des premier et deuxième commutateurs P et N, respectivement, du convertisseur courant continu-courant continu (figure 1).

Ces premier et deuxième condensateurs Cp et Cn sont chacun raccordés à la borne inverseuse des comparateurs A1 et A2, la borne non inverseuse recevant la sortie $V_s$ du convertisseur.

Comme on le voit sur la figure 3, l'une des bornes du premier condensateur Cp, qui est raccordée à la borne inverseuse du comparateur A1 correspondant, est raccordée, par l'intermédiaire d'un premier commutateur K1 à une source S1 d'alimentation à courant continu, qui délivre un courant Ip.

Un deuxième commutateur K2 est disposé en parallèle sur ce premier condensateur Cp.

Les condensateurs K1 et K2 sont pilotés à l'ouverture et à la fermeture au moyen d'un signal StartP de commande de la fermeture de premier commutateur P du convertisseur, de sorte qu'un niveau bas sur ce signal provoque la fermeture du deuxième commutateur K2 et l'ouverture du premier commutateur K1 et qu'un niveau haut de ce signal de commande provoque la fermeture du premier commutateur K1 et l'ouverture du deuxième commutateur K2.

En ce qui concerne le deuxième condensateur Cn, celui-ci est raccordé à une source d'alimentation continue Vsup. Un commutateur K3 pilote sa décharge selon un courant In. Un quatrième commutateur K4 est en outre placé en parallèle sur ce deuxième condensateur Cn.

Ces troisième et quatrième commutateurs K3 et K4 sont pilotés par l'intermédiaire d'un signal StartN de commande de la fermeture du deuxième commutateur du convertisseur, de sorte qu'un niveau bas de ce signal de commande provoque la fermeture du quatrième commutateur K4 et l'ouverture du troisième commutateur K3, et qu'un niveau haut de ce signal de commande, provoque la fermeture du troisième commutateur K3 et l'ouverture du quatrième commutateur K4.

On notera que les signaux de pilotage StartP et StartN de la fermeture des premier et deuxième commutateurs P et N sont élaborés de manière classique. Leur élaboration ne sera donc pas détaillée par la suite.

En se référant maintenant à la figure 4, le circuit de régulation qui vient d'être décrit fonctionne de la façon suivante.

Au démarrage, le signal StartP de commande de la fermeture du premier commutateur P du convertisseur est positionné à un niveau haut, et le signal de commande de la fermeture du deuxième commutateur N du convertisseur est positionné à un niveau bas.

Le premier commutateur K1 du circuit de régulation est ainsi fermé et le deuxième commutateur K2 de ce circuit de régulation est ouvert.

Dès lors, le premier condensateur Cp se charge à partir d'un niveau de tension nul avec un courant constant de valeur Ip. Dès que le niveau de tension aux bornes du condensateur Cp atteint le niveau de sortie $V_s$ de l'alimentation à découpage, le signal de commande StopP délivré par le premier comparateur A1 passe au niveau haut, provoquant le passage au niveau bas du signal de commande du premier commutateur P du convertisseur et l'ouverture consécutive de ce dernier.

Simultanément, le signal de commande StartN du deuxième commutateur N du convertisseur est positionné à un niveau haut, provoquant une fermeture consécutive de ce deuxième commutateur.

Ceci provoque, d'une part, une décroissance linéaire du courant circulant dans l'inducteur et, d'autre part, une décharge du deuxième condensateur Cn du régulateur 10, à partir du niveau de tension $V_{sup}$, et ce à courant constant In.

Dès que le niveau de tension aux bornes du deuxième condensateur Cn atteint le niveau de tension de sortie $V_s$ de la source d'alimentation, le signal de commande StopN du deuxième commutateur N de la source d'alimentation passe au niveau haut, provoquant dès lors une ouverture de ce deuxième commutateur.

Le circuit qui vient d'être décrit est utilisé pour engendrer des impulsions de pilotage des commutateurs de la source d'alimentation, à l'expiration de périodes de temps prédéterminées $T_{on}P$ et $T_{on}N$, qui correspondent respectivement aux durées de conduction des premier et deuxième commutateurs, ou de croissance et de décroissance linéaires du courant dans l'inductance L.

En se référant à nouveau à la figure 2, le courant circulant dans l'inductance d'un circuit d'alimentation abaisseur de tension croît lors de la fermeture du premier commutateur selon une pente égale à (Vsup-Vs)/L et décroît, lors de la fermeture du deuxième commutateur, selon une pente égale à -Vs/L.

Le courant maximum Imax et les durées $T_{on}P$ et $T_{on}N$, lesquelles correspondent respectivement aux durées pendant lesquelles les premier et deuxième commutateurs P et N sont passants satisfont alors aux relations suivantes :

$$Im\mathit{ax} = TonP \times \frac{V\mathit{sup}\text{-}Vs}{L} \qquad (1)$$

et,

$$TonN = \frac{\text{-}Im\mathit{ax}}{\text{-}Vs/L} \qquad (2)$$

d'où :

$$TonN = TonP \times \frac{V\mathit{sup}\text{-}Vs}{Vs} \qquad (3)$$

Comme on le conçoit, les durées $T_{on}P$ et $T_{on}N$ satisfont également aux conditions suivantes :

$$T_{on}P = \frac{V_s}{I_p \times C_p} \qquad (4)$$

$$T_{on}N = \frac{V\mathit{sup} - V_s}{I_n \times C_n} \qquad (5)$$

Ainsi, outre les niveaux de tension aux bornes des condensateurs Cp et Cn du circuit de régulation, ces durées $T_{on}P$ et $T_{on}N$ ne dépendent que de la valeur des condensateurs Cn et Cp et de la valeur du courant In et Ip circulant à travers ces derniers.

La valeur des courants In et Ip sont choisies de manière à être égales, de même que la valeur des condensateurs Cp et Cn.

Dès lors, les durées $T_{on}N$ et $T_{on}P$ satisfont l'égalité (3) mentionnée ci-dessus.

Comme on le conçoit, le respect de cette égalité permet de piloter l'ouverture des premier et deuxième commutateurs dès que le courant Ip circulant à travers l'inductance s'annule.

Ainsi, conformément à l'invention, il est possible de s'affranchir de l'utilisation de détecteurs de courant pour piloter les cellules de commutation d'une source d'alimentation à découpage avant que le courant circulant à travers l'inductance de cette alimentation devienne négatif.

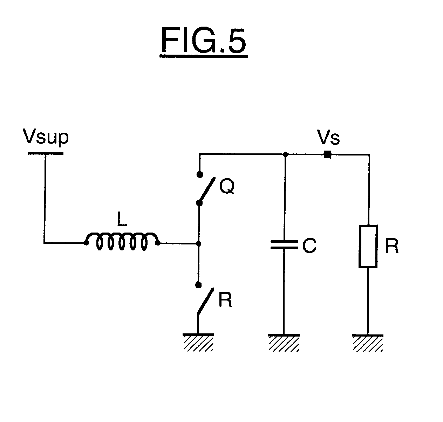

On notera enfin que, comme mentionné précédemment et en se référant à la figure 5, l'invention qui vient d'être décrite s'applique également au pilotage de circuits d'alimentation élévateurs de tension.

Comme on le voit sur cette figure, un tel circuit d'alimentation comporte également une inductance L dont une première borne est raccordée à une source d'alimentation à courant continu et dont une deuxième borne est raccordée, d'une part, à la sortie de source d'alimentation par l'intermédiaire d'un premier commutateur Q et, d'autre part, à la masse par l'intermédiaire d'un deuxième commutateur R.

Ainsi, des signaux analogues aux signaux Start P et Stop P, d'une part, et Start N et Stop N, d'autre part, sont utilisés pour piloter le premier commutateur Q et le deuxième commutateur R.

Dans ce type de circuit, la tension de sortie Vs est supérieure à la tension continue Vsup. En reprenant les terminologies utilisées dans le circuit de la figure 3, les durées TonQ et TonR, qui correspondent aux temps de conduction des commutateurs Q et R, respectivement, pendant lesquelles le condensateur Cp se charge de 0V à Vsup et pendant laquelle le condensateur Cn se décharge de Vs à Vsup, respectivement, satisfont la relation suivante

$$TonQ = TonR \times \frac{V\mathit{sup}}{Vs\text{-}V\mathit{sup}} \qquad (6)$$

**Revendications**

1. Dispositif de pilotage d'une source d'alimentation à découpage, ladite source d'alimentation comprenant une inductance (L) et deux commutateurs (N, P ; Q, R) de commande du niveau de tension circulant dans l'inductance, **caractérisé en ce qu'**il comporte un premier condensateur (Cp) destiné à être chargé à courant constant, à partir d'un niveau de tension nul, un deuxième condensateur (Cn) destiné à être déchargé audit courant constant à partir d'un niveau de tension prédéterminé (Vsup) supérieur au niveau de tension (Vs) de la source d'alimentation à courant continu, et des moyens de comparaison (A1, A2) pour comparer la tension nominale de sortie de la source d'alimentation avec la tension des premier et deuxième condensateurs (Cp, Cn) pour élaborer des signaux de pilotage des premier et deuxième commutateurs.

2. Dispositif de pilotage selon la revendication 1, **caractérisé en ce que** les moyens de comparaison comportent un premier comparateur (A1) dont la borne non inverseuse est raccordée à la sortie de la source d'alimentation à découpage et dont la borne inverseuse reçoit le niveau de tension du premier condensateur (Cp).

3. Dispositif de pilotage selon l'une des revendications 1 et 2, **caractérisé en ce que** les moyens de comparaison comportent un deuxième comparateur (A2) dont la borne non inverseuse est raccordée à la sortie de la source d'alimentation à découpage et dont la borne inverseuse reçoit le niveau de tension du deuxième condensateur.

4. Source d'alimentation à découpage, comprenant une inductance (L) raccordée d'une part à une source d'alimentation à courant continu par l'intermédiaire d'un premier commutateur (P) et, d'autre part, à la masse par l'intermédiaire d'un deuxième commutateur (N) et un dispositif de pilotage des commutateurs, **caractérisé en ce que** le dispositif de pilotage comporte un premier condensateur (Cp) destiné à être chargé à courant constant, à partir d'un niveau de tension nul, un deuxième condensateur (Cn) destiné à être déchargé audit courant constant à partir d'un niveau de tension prédéterminé (Vsup) supérieur au niveau de tension de la source d'alimentation à courant continu, et des moyens de comparaison (A1, A2) pour comparer la tension nominale de sortie de la source d'alimentation avec la tension des premier et deuxième condensateur pour élaborer des signaux de pilotage des premier et deuxième commutateurs.

5. Source d'alimentation à découpage, comprenant une inductance (L) dont une première borne est raccordée à une source d'alimentation à courant continu et dont une deuxième borne est raccordée, d'une part, à la sortie de source d'alimentation par l'intermédiaire d'un premier commutateur (Q) et, d'autre part, à la masse par l'intermédiaire d'un deuxième commutateur (R) et un dispositif de pilotage des commutateurs, **caractérisé en ce que** le dispositif de pilotage comporte un premier condensateur (Cp) destiné à être chargé à courant constant, à partir d'un niveau de tension nul, un deuxième condensateur (Cn) destiné à être déchargé audit courant constant à partir d'un niveau de tension prédéterminé (Vsup) supérieur au niveau de tension de la source d'alimentation à courant continu, et des moyens de comparaison (A1, A2) pour comparer la tension nominale de sortie de la source d'alimentation avec la tension des premier et deuxième condensateur pour élaborer des signaux de pilotage des premier et deuxième commutateurs.

6. Procédé de pilotage d'une source d'alimentation à découpage comprenant une inductance (L) et deux commutateurs (N, P ; Q, R) de commande du niveau de tension circulant dans l'inductance et un dispositif de pilotage des commutateurs, **caractérisé en ce qu'**il comporte les étapes suivant lesquelles, on charge à courant constant, à partir d'un niveau de tension nul, un premier condensateur (Cp), on décharge audit courant constant un deuxième condensateur (Cn) à partir d'un niveau de tension prédéterminé supérieur au niveau de tension de la source d'alimentation à courant continu, et l'on compare la tension nominale de sortie de la source d'alimentation avec la tension des premier et deuxième condensateur (Cp, Cn) pour élaborer des signaux de pilotage des premier et deuxième commutateurs.

## FIG.1

## FIG.2

# FIG.3

# FIG.4

# <u>FIG.5</u>

## EP 1 372 252 A1

**Office européen des brevets**

## RAPPORT DE RECHERCHE EUROPEENNE

Numéro de la demande

EP 03 29 1403

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 377 032 B1 (ANDRUZZI ET AL) 23 avril 2002 (2002-04-23) * colonne 1, ligne 1 - colonne 7, ligne 55; figures 1-7 * | 1-6 | H02M3/158 |
| A | EP 0 884 746 A (LINEAR TECHNOLOGY CORPORATION) 16 décembre 1998 (1998-12-16) * colonne 5, ligne 23 - colonne 9, ligne 50; figures 1-10 * | 1-6 | |
| A | US 6 225 795 B1 (STRATAKOS ET AL) 1 mai 2001 (2001-05-01) * colonne 3, ligne 65 - colonne 10, ligne 48; figures 1-14 * | | |

**DOMAINES TECHNIQUES RECHERCHES (Int.Cl.7)**

H02M

Le présent rapport a été établi pour toutes les revendications

| Lieu de la recherche | Date d'achèvement de la recherche | Examinateur |
|---|---|---|
| MUNICH | 4 septembre 2003 | Calarasanu, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

9

## ANNEXE AU RAPPORT DE RECHERCHE EUROPEENNE
## RELATIF A LA DEMANDE DE BREVET EUROPEEN NO.

EP 03 29 1403

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-09-2003

| Document brevet cité au rapport de recherche | | Date de publication | Membre(s) de la famille de brevet(s) | | Date de publication |
|---|---|---|---|---|---|
| US 6377032 | B1 | 23-04-2002 | AUCUN | | |
| EP 884746 | A | 16-12-1998 | US | 5847554 A | 08-12-1998 |
| | | | DE | 69807991 D1 | 24-10-2002 |
| | | | DE | 69807991 T2 | 23-01-2003 |
| | | | EP | 0884746 A2 | 16-12-1998 |
| | | | TW | 432789 B | 01-05-2001 |
| US 6225795 | B1 | 01-05-2001 | US | 6020729 A | 01-02-2000 |
| | | | EP | 1040557 A1 | 04-10-2000 |
| | | | JP | 2002509417 T | 26-03-2002 |
| | | | TW | 437175 B | 28-05-2001 |
| | | | WO | 9931790 A1 | 24-06-1999 |

EPO FORM P0460

Pour tout renseignement concernant cette annexe : voir Journal Officiel de l'Office européen des brevets, No.12/82